# EUROPEAN PATENT APPLICATION

(11) **EP 1 675 344 A1**
(43) Date of publication of application: **28.06.2006**
(21) Application number: 04445130.0
(22) Date of filing: 23.12.2004
(51) Int. Cl.: H04L 29/06, H04L 12/58

(54) **A method and arrangement for communicating multimedia content**

(71) Applicant: TELEFONAKTIEBOLAGET LM ERICSSON, 164 83 Stockholm (SE)
(72) Inventor: Olfsson, Ulf, 192 77 Solentuna (SE); Stille, Mats, 116 43 Stockholm (SE)
(74) Representative: Larfeldt, Helene

(57) **Abstract**

A method and apparatus for conveying multimedia content, as selected by a user (202), from a sending entity (A) to a receiving terminal (B). The content is sent by immediate delivery over IP multimedia if the receiving terminal is compatible with respect to the selected multimedia content. The sending entity checks (204,208) the compatibility of the receiving terminal with respect to the selected multimedia content, and sends an MMS message (212) by deferred delivery including the selected content, if the receiving terminal is found to be incompatible. Thereby, multimedia content can be conveyed by deferred delivery, even if immediate delivery is not possible due to incompatibility of the receiving terminal, without relying on specific solutions in any intermediate network(s).

## Description

### TECHNICAL FIELD

The present invention relates generally to a method and apparatus for conveying multimedia content, such as visual content, to a receiving terminal. In particular, the invention enables transfer of the content even when the receiving terminal is incompatible in a first transmission attempt over an IP multimedia network.

### BACKGROUND OF THE INVENTION AND PRIOR ART

Until recently, wireless mobile terminals have been used basically for making voice calls. Standardised and well-established communication technologies and protocols are then utilised to communicate voice between fixed and/or mobile terminals using circuit-switched communication channels.

However, a multitude of new telephony services involving "multimedia" are now rapidly being developed, enabled by the introduction of new technologies allowing for notably higher transmission rates and increased network capacity. For example, GPRS (General Packet Radio Service) and WCDMA (Wideband Code Division Multiple Access) technologies are currently emerging for enabling wireless telephony services requiring a wide range of transmission rates and different protocols and media formats.

The trend today is also a move towards packet-switched networks and technologies providing more capacity and flexibility as compared to the traditional circuit-switched networks. Further, new sophisticated mobile terminals are also emerging on the market, equipped with functionality to handle the new services, including high resolution colour displays and various codecs (coders/ decoders) e.g. for visual information.

Multimedia services typically involve transmission of data representing text, documents, images, audio files and video files in a multitude of formats and combinations, and according to various different protocols. The term "multimedia" will be used in this description as generally referring to telephony services involving the transfer of any choice of media, typically with visual content, apart from ordinary voice.

A prevailing goal or ambition in the field of telecommunication is to converge all services on to a single transport mechanism - the packet based Internet Protocol (IP), regardless of the type of access networks and technologies involved. A network architecture called "IP Multimedia Subsystem" (IMS) has therefore been developed by the 3^{rd} Generation Partnership Project (3GPP) as an open standard, to give operators of access networks the ability to offer multimedia services in the packet domain. IMS is a platform for enabling services based on IP transport, involving immediate delivery of multimedia content from one terminal to another, sometimes referred to as "instant messaging". IMS is more or less independent of the access technology used, and is basically not restricted to any limited set of specific services.

In this description, the term "IP multimedia" will be used to represent immediate delivery from point-to-point (or "peer-to-peer") of any multimedia content using IP technology. Generally, point-to-point transfer of content refers to transfer either from one person to another or from a content server to a person.

The term "immediate delivery" refers to the transfer of content directly between the sending and receiving terminals, in contrast to "deferred delivery" meaning that the sent content is temporarily stored in an intermediate messaging service node during a period of time before it is finally delivered to the receiver. This method is sometimes also referred to as "store-and-forward" and is used in the well-known MMS (Multimedia Messaging Service) concept where the sent multimedia content is processed and stored in an MMS service node in the service network before delivery to the receiver. The processing of content data in MMS service nodes typically involves adaptation of the data to the capabilities of the receiving terminal by using well-established formats.

When using multimedia services, the prerequisites for a specific session will vary depending on the invoked service and the capabilities of the calling and called terminals, respectively, as well as on other factors. During a session, certain session parameters defining the rules of communication must be used by both the calling and called terminals in order to communicate the desired information. Such session parameters are related to codecs and storage means available in each terminal, as well as applications and signalling protocols.

Since many different types of terminals are available on the consumer market, two terminals about to communicate multimedia will most likely have different capabilities in some respect, and each terminal has typically no knowledge of the capabilities of the other. In order to establish an IP multimedia session, session parameters must therefore first be selected and established in a session set-up procedure, which is a kind of negotiation typically performed by the two terminals only, without involving any intermediate network node.

Thus, the terminals must exchange information regarding their specific capabilities and preferences, in order to agree on which session parameters to use during a forthcoming IP multimedia session. A specification for session set-up has been defined called "SIP" (Session Initiation Protocol, according to the standard IETF RFC 3261 et al). SIP is an application-layer control (signalling) protocol for creating, modifying and terminating sessions over a packet-switched logic. In SIP, a message called "INVITE" is defined to initiate a session during session set-up, when the terminals basically exchange their capabilities. The SIP standard is used by the above-mentioned IMS system to establish and control IP multimedia communications.

Another method called "OPTIONS" is also specified in the SIP protocol allowing one terminal to query another terminal as to its capabilities regarding codecs and supported applications, without the user actually "calling" the other party. According to this method, the terminal sends a message called "SIP OPTIONS" to the other terminal, which then responds by sending over its capabilities to the first terminal. The first terminal can then indicate the optional multimedia to its user, e.g. by displaying available services and/or applications as icons or the like on the screen. In this way, the user can decide which type of service and media to use in a forthcoming session with the other party. After responding to a SIP OPTIONS message, a terminal may likewise automatically send a SIP OPTIONS message to the first terminal. Alternatively, it has been proposed that a terminal shall include its own capabilities when sending a SIP OPTIONS message, in order to save round-trips in this dialogue.

In PCT/SE03/01901, a solution is disclosed where the capability exchange procedure can be bypassed by storing (or "caching") in each terminal the capabilities of the other terminal after a first session. When a second session is to be conducted between the same two terminals at a later occasion, the stored capabilities can be retrieved and used, merely by recognising the opposite terminal, in order to save time and signalling.

However, IP multimedia communication will sometimes fail due to the inability of a terminal to receive content from another terminal. For example, the receiving terminal may not be capable of handling a specific data format due to lack of required codecs, or cannot receive data files that are too large due to lack of storage space, etc. In another case, the receiving terminal may not support an application used by the other terminal. In yet another case, the receiving terminal may be currently connected to an access network that cannot submit the content to the terminal, at least not during an ongoing voice call, e.g. due to a current lack of bandwidth or incapability of handling circuit-switched and packet-switched communication simultaneously during an ongoing call.

A terminal unable to receive multimedia content for whatever reason, e.g. as exemplified above, will hereafter be referred to as "incompatible" for short. A "mainstream technology" has been developed allowing the terminating access network to convert the format of transmitted content into another format that the receiving terminal can handle, in the case of incompatibility. However, in the rapidly developing IP multimedia technology it is difficult for access networks to be up-to-date with the latest plethora of terminal capabilities for IP multimedia content, particularly visual content. It might also be possible for the sending terminal to convert the content "on the fly" into other formats that the receiving terminal hopefully can accept, and then try to send it again. However, this is a difficult task and far from all terminals have that capability.

If a first terminal generally tries to send any IP multimedia content to an incompatible second terminal, e.g. by first sending an INVITE message according to the SIP standard, the second terminal will respond by sending some kind of error message, or not respond at all. In that case, the desired content cannot be conveyed to the incompatible second terminal. This shortcoming will of course be perceived as a problem by the terminal users, not being able to exchange multimedia content, as well as by network operators concerned, being deprived of potential revenue. Hence, it is desirable to overcome the problem of conveying IP multimedia content to incompatible terminals, without relying on the existing mainstream technology in access networks or on format conversion capabilities in terminals.

### SUMMARY OF THE INVENTION

It is an object of the present invention to provide a solution for communicating multimedia content from a sending entity to a receiving terminal, even if the receiving terminal is currently unable to receive the multimedia content by immediate delivery over an IP multimedia service network. It is another object of the present invention to convey multimedia content from a sending entity to a seemingly incompatible second terminal.

These objects and others are obtained by providing a method and arrangement for conveying multimedia content, as selected by a user, from a sending entity to a receiving terminal. It is assumed that the content is sent by immediate delivery over IP multimedia if the receiving terminal is compatible with respect to the selected multimedia content.

In the invented method, the sending entity automatically checks the compatibility of the receiving terminal with respect to the selected multimedia content, and sends the selected multimedia content by deferred delivery over an intermediate messaging service node, if the receiving terminal is found to be incompatible based on the previous checking step. The content is preferably sent in an MMS message which is stored and processed in said intermediate messaging service node.

In one embodiment, the compatibility of the receiving terminal is checked by sending an IP multimedia session invitation message to the receiving terminal B, containing a description of the selected content. The content description preferably includes information on a coded format and data size of the selected content. If an IMS network is used, the invitation message is preferably a SIP INVITE message. Thus, sending the selected multimedia content by deferred delivery may depend on if an error message indicating incompatibility is received in response to the invitation message. Alternatively, the selected multimedia content may be sent by deferred delivery if no response to the invitation message is received, thereby indicating incompatibility.

In another embodiment, the compatibility of the receiving terminal may be checked by sending a capability query to the receiving terminal, and by comparing received capabilities with the selected content.

In yet another embodiment, the compatibility of the receiving terminal may be checked by determining whether the capabilities of the receiving terminal have been cached in a previous multimedia session. If so, the capabilities are retrieved and compared with the selected content.

The selected multimedia content is sent by deferred delivery if said comparison according to the previous embodiments indicates incompatibility.

The sending entity may first inform its user on the incompatibility and optional deferred delivery, and may then send the multimedia content by deferred delivery if the user consents. Alternatively, the sending entity may first send the multimedia content by deferred delivery, and then inform its user on the incompatibility and sent multimedia content by deferred delivery.

The inventive method can be executed during an ongoing call or when the sending entity and the receiving terminal are idle.

The present invention further encompasses a communication entity adapted to convey multimedia content, as selected by a user, to a receiving terminal. It is assumed that the communication entity can send the content by immediate delivery over IP multimedia if the receiving terminal is compatible with respect to the selected multimedia content.

In particular, the communication entity is adapted to determine whether the receiving terminal is compatible or incompatible with respect to the selected multimedia content, and to send the selected multimedia content by deferred delivery over an intermediate messaging service node, if the receiving terminal is incompatible with respect to the selected content. The communication entity is preferably further adapted to send the content by deferred delivery in an MMS message which is stored and processed in said intermediate messaging service node.

Generally, the communication entity is further adapted to determine the compatibility of the receiving terminal, based on retrieved or obtained terminal capabilities, or based on received session invitation response or lack of such a response.

In one embodiment, the communication entity is adapted to send an IP multimedia session invitation message to the receiving terminal B, containing a description of the selected content. The content description preferably includes information on a coded format and data size of the selected content. If an IMS network is used, the invitation message is a SIP INVITE message. The communication entity is then further adapted to send the selected multimedia content by deferred delivery if an error message indicating incompatibility is received in response to the invitation message. The communication entity may also be adapted to send the selected multimedia content by deferred delivery if no response to the invitation message is received, thereby indicating incompatibility.

In another embodiment, the communication entity may be adapted to send a capability query to the receiving terminal and compare received capabilities with the selected content.

In yet another embodiment, the communication entity may be adapted to determine whether the capabilities of the receiving terminal have been cached in a previous multimedia session, and if so, the capabilities are retrieved and compared with the selected content.

The communication entity may also be adapted to send the selected multimedia content by deferred delivery if the comparison according to the previous embodiments indicates incompatibility.

The communication entity may further be adapted to first inform its user on the incompatibility and optional deferred delivery, and then send the selected multimedia content by deferred delivery if the user consents. Alternatively, the communication entity may be adapted to first send the selected multimedia content by deferred delivery, and then inform its user on the incompatibility and sent multimedia content by deferred delivery.

Further features and benefits of the present invention will be apparent from the detailed description below.

### BRIEF DESCRIPTION OF THE DRAWINGS

The present invention will now be described in more detail by means of preferred embodiments and with reference to the accompanying drawings, in which:
- Fig. 1 is a schematic view of a communication scenario where the present solution may be used.
- Fig. 2 is a signalling diagram illustrating one embodiment of a procedure for communicating multimedia content, in accordance with the present invention.
- Fig. 3 is a signalling diagram illustrating another embodiment of a procedure for communicating multimedia content, in accordance with the present invention.
- Fig. 4 is a flow chart of a basic procedure for communicating multimedia content, in accordance with the present invention.
- Fig. 5 is a schematic block diagram of a communicating entity in which the present invention can be implemented.

### DESCRIPTION OF PREFERRED EMBODIMENTS

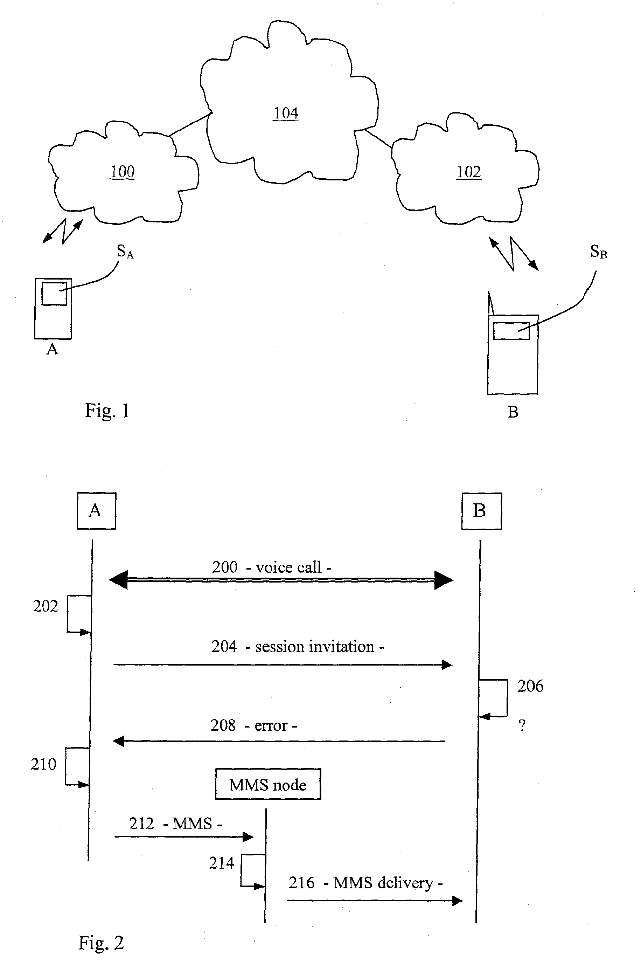

Fig. 1 illustrates schematically a basic communication scenario between two terminals A and B, where the present solution may be used. In this case, terminal A is a small-sized modern mobile telephone currently in radio connection with a first access network 100, and terminal B is a relatively old-fashioned mobile telephone currently in radio connection with a second access network 102. Each terminal A, B is equipped with a viewing screen S_{A} and S_{B}, respectively, for displaying available multimedia options in the form of icons, menus or the like, as well as any received visual content.

In this example, the terminals A and B have different capabilities with respect to codecs, applications and/or memory storage size. For example, terminal A may have some recently developed applications installed, lacking in terminal B due to its older date. The two access networks 100 and 102 are generally interconnected by means of a generic "backbone" network 104, which in practice may be any type of communication network, or combination of different networks. It is assumed that terminals A, B and networks 100-104 can use well-established communication techniques which are not necessary to describe to understand the present invention.

A procedure will now be described, with further reference to a signalling diagram in Fig. 2, for conveying multimedia content from terminal A to terminal B. In the present example, terminals A and B are initially engaged in a voice call, as indicated in a first step 200. In this context, it does not matter which one of A and B is the calling party and called party, respectively. At this stage, each terminal A, B has typically no knowledge of the capabilities of the other, unless they have cached the capabilities in connection with an earlier session, as described above.

During the voice call, the user of terminal A decides to send some multimedia content to the user of terminal B, e.g. an image, a document, a video clip or audio clip, in order to discuss it at the same time over the ongoing voice call. Therefore, the user activates a suitable multimedia application in his/her terminal A and selects the content from a storage means in the terminal, not shown, as schematically indicated in a step 202.

Then, as the user presses a key or the equivalent on terminal A for submitting the selected content in a first attempt, terminal A first sends an invitation message in a next step 204, inviting terminal B to execute an IP multimedia session involving the transfer of the selected content, before submitting the actual content. The session invitation contains a description of the selected content/media, typically including information on the activated application as well as the coded format (e.g. jpeg, gif or 3gp) and data size (e.g. 50 Kbytes) of the selected content, thereby indicating what codec, application and storage capacity are required to receive the content. If the SIP standard is used in this procedure, the session invitation in step 204 is the above-mentioned INVITE message. Thus, the session invitation effectively queries terminal B if it is capable of receiving the selected content.

In this example, terminal B is in fact an incompatible terminal and does not recognise the coded format or application, or does not possess the required storage space when receiving the session invitation, as indicated in a step 206. In response thereto, terminal B therefore sends an error message to terminal A in a step 208, indicating incompatibility and failure of the first content transfer attempt. Alternatively, terminal B may not respond at all, thereby likewise indicating incompatibility.

So far, this procedure has been conducted according to previously known routines, and the user of terminal A would conventionally have to accept the fact that transfer of the selected content to B is not possible, upon receiving the error message. However, according to the present solution, terminal A is adapted to automatically send the selected multimedia content by deferred delivery over an intermediate messaging service node instead, in a second attempt, optionally after consent from the user.

Preferably, terminal A includes the selected content in an MMS (Multimedia Message Service) message and sends the MMS to an MMS service node. MMS is a well-established mechanism for transmitting multimedia content in standardised formats that most terminals can handle.

Thus in this example, in response to receiving the error message in step 208, terminal A will include the selected content in an MMS message, as indicated schematically in a step 210, and then sends the created MMS message towards terminal B, in a next step 212. Optionally, terminal A may first inform its user on the incompatibility by prompting him/her with an indication such as: "IP multimedia failed, send MMS?". Then, the MMS is sent if the user consents by pressing a "yes" key or equivalent. Alternatively, terminal A may automatically send the MMS and simply inform its user: "IP multimedia failed, MMS sent instead".

In step 212, the MMS message is first received and temporarily stored in a specific MMS service node in the service network, e.g. network 200 of terminal A in Fig. 1. The MMS node processes the message in a step 214 by converting the included multimedia content into a standardized MMS format that any terminals with MMS capability can handle, before transmitting the MMS message further to terminal B, in a final step 216. In this way, the selected multimedia content will finally reach the receiver by deferred delivery, even if the first attempt to send it by immediate delivery over IP multimedia has failed.

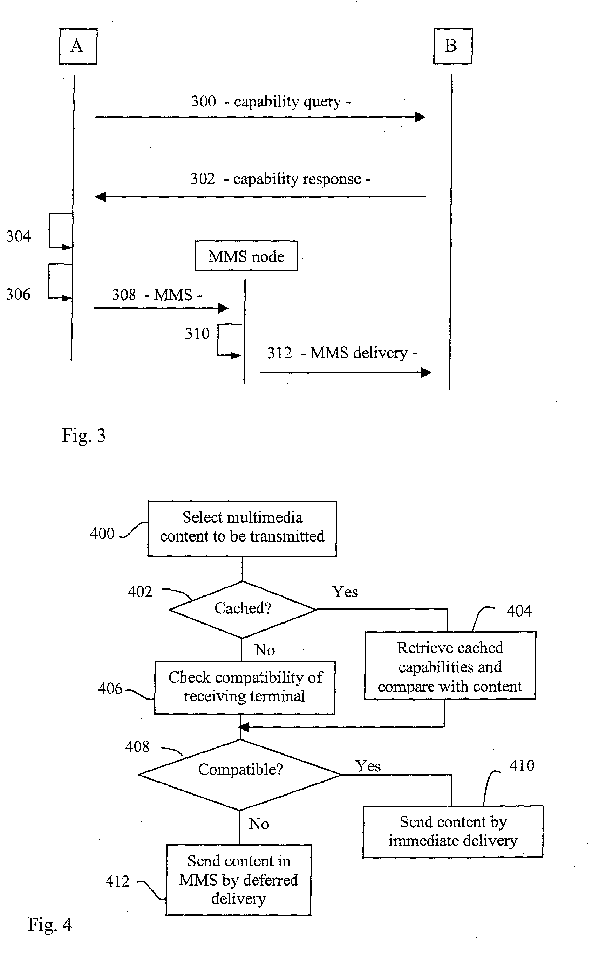

Fig. 3 is a signalling diagram illustrating an alternative procedure for conveying multimedia content from terminal A to terminal B. In this case, terminals A and B are not engaged in any voice call, but the user of terminal A decides to send some multimedia content to the user of terminal B as a separate action. As in the previous example, terminal A has no knowledge of the capabilities of terminal B, i.e. they have not been cached in any previous session.

The user of terminal A may then use the above-described method of querying the other terminal as to its capabilities regarding codecs, storage capacity and supported applications, without actually calling, e.g. by sending the SIP OPTIONS message if IMS is used. Thus, in a first step 300, terminal A sends a capability query to terminal B, which then responds by sending over its capabilities to terminal A, in a next step 302. The next step 304 illustrates that the user selects multimedia content in terminal A, although this step may as well have been done before the capability query in step 300.

In a next step 306, terminal A concludes that terminal B is incompatible with respect to the selected content, by comparing the content with the capabilities received in the previous step 302. The selected multimedia content is then sent by deferred delivery instead over an intermediate messaging service node, in this case as an MMS message. The following steps 308-312 of conveying the MMS to terminal B via the MMS node are wholly equivalent to steps 212-216 in the example of Fig. 2, and are therefore not described again here.

The present invention is not limited to the above-described examples of Fig's 2 and 3, but can be modified in several ways, For example, terminal A may send a capability query as in step 302, even if the two terminals are engaged in a voice call, and may further send the session invitation of step 204 even if they are not engaged in a call. Further, the capabilities of terminal B may have been cached in terminal A, but when retrieved may reveal that terminal B is incompatible. In that case, steps 204-208 and 300-302 can be omitted since it is not necessary to obtain the capabilities from B. Moreover, a content server or the like could be the sending entity in which the present solution is implemented.

Fig. 4 is a flow chart illustrating a basic procedure for communicating multimedia content from a sending terminal to a receiving terminal, according to the present solution. The terminals may or may not initially be engaged in a voice call. In a first step 400, multimedia content is selected to be sent to the receiving terminal. In a step 402, it is determined whether the capabilities of the receiving terminal have been cached in a previous multimedia session, by using conventional routines which are not necessary to described here. If so, the capabilities are retrieved and compared with the selected content in a step 404. The step 400 of selecting multimedia content may alternatively be executed after step 402.

If the capabilities of the receiving terminal have not been cached, the compatibility of the receiving terminal is checked in a next step 406. The compatibility can be checked e.g. by sending a session invitation as in step 204 above and then receiving either an error message (or no response at all) or an acceptance message, or by sending a capability query as in step 300 above and then comparing received capabilities with the selected content. Thus, the compatibility checking step 406 is intended to represent either of these two options.

A next step 408 illustrates determination of the compatibility, and if the receiving terminal is determined to be compatible the content is sent by immediate delivery over IP multimedia in a conventional manner, in step 410. However, if the receiving terminal is determined not to be compatible the selected content is sent by deferred delivery over an intermediate messaging service node instead, e.g. in an MMS message, optionally after consent of the user, in a final step 412.

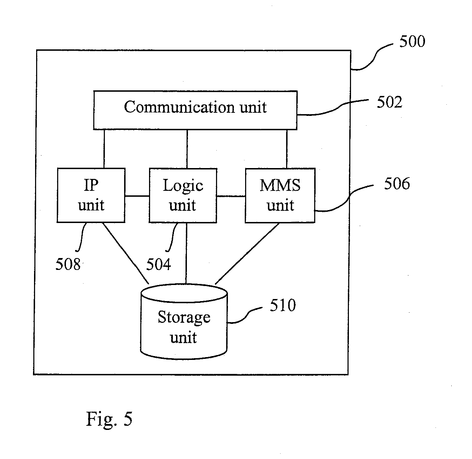

Fig. 5 illustrates schematically an exemplary communication entity 500 having basic functional units 502-510 that are generally required to implement the present invention, again using the MMS mechanism. Below, only the specific functions relevant to the present invention will be described, although these units of course have other more or less conventional functions as well.

A communication unit 502 is specifically adapted to physically transmit session invitations and/or capability queries, as well as receiving responses thereto. The communication unit 502 is further adapted to transmit any created MMS messages towards any receiving terminal, which will then be received in an associated MMS node or the like according to a store-and-forward procedure.

A logic unit 504 is specifically adapted to determine whether a terminal intended to receive selected multimedia content is compatible or incompatible with respect thereto, i.e. able or unable to receive the selected content, e.g. based on retrieved or obtained terminal capabilities or based on received session invitation response (or lack of response).

An MMS unit 506 is specifically adapted to create an MMS message including selected multimedia content, if the logic unit 504 determines that a receiving terminal is incompatible with respect to the selected content, and then send the MMS message by deferred delivery over an intermediate messaging service node. An IP multimedia unit 508 is adapted to send selected multimedia content by immediate delivery, if the logic unit 504 determines that a receiving terminal is compatible with respect to the selected content.

Finally, a storage unit 510 is specifically adapted to store multimedia content that can be selected for transmission to any receiving terminal, and optionally to store or cache capabilities of other terminals in connection with multimedia sessions.

The present invention will thus provide a solution for terminal users to convey multimedia content by deferred delivery of MMS, even if immediate delivery over IP multimedia is not possible due to incompatibility of the receiving terminal, and the network operator(s) will also gain revenue therefrom. It is a great advantage that this fall-back procedure is wholly implemented in terminals, utilizing the well-established existing MMS functionality, without relying on specific measures in any intermediate communication network(s). Immediate delivery, such as the IMS solution, basically requires a negotiation of mutual codecs, e.g. by exchanging capabilities, which is not always successful. Using deferred delivery, such as the MMS mechanism, as a fall-back when immediate delivery fails provides a reliable solution since a great number of existing predefined codecs and transcoders in the intermediate messaging service node can be utilised for various media types and combinations. Thus any necessary adaptation of the content to the receiving equipment can be handled in the service network instead of by the sending entity, albeit with some extra delay.

While the invention has been described with reference to specific exemplary embodiments, the description is in general only intended to illustrate the inventive concept and should not be taken as limiting the scope of the invention. For example, the present invention is not limited to using the currently established MMS mechanism as a fall-back solution when immediate delivery fails, but any other equivalent mechanism for conveying multimedia content by deferred delivery over an intermediate messaging service node may be used. The described "sending entity" could be a mobile phone or a content server. The present invention is generally defined by the appended claims.

## Claims

1. A method of conveying multimedia content, as selected by a user, from a sending entity to a receiving terminal, wherein the content is sent by immediate delivery over IP multimedia if the receiving terminal is compatible with respect to the selected multimedia content, **characterised in that** the following steps are automatically executed by the sending entity:
- checking the compatibility of the receiving terminal with respect to the selected multimedia content, and
- sending the selected multimedia content by deferred delivery over an intermediate messaging service node, if the receiving terminal is found to be incompatible based on the previous checking step.

2. A method according to claim 1, **characterised in that** the content is sent in an MMS message which is stored and processed in said intermediate messaging service node.

3. A method according to claim 1 or 2, **characterised in that** said checking step comprises sending an IP multimedia session invitation message to the receiving terminal B, containing a description of the selected content.

4. A method according to claim 3, wherein the content description includes information on a coded format and data size of the selected content.

5. A method according to claim 3 or 4, wherein an IMS network is used and the invitation message is a SIP INVITE message.

6. A method according to any of claims 3-5, **characterised in that** the selected multimedia content is sent by deferred delivery if an error message indicating incompatibility is received in response to the invitation message.

7. A method according to any of claims 3-5, **characterised in that** the selected multimedia content is sent by deferred delivery if no response to the invitation message is received, thereby indicating incompatibility.

8. A method according to claim 1 or 2, **characterised in that** said checking step comprises sending a capability query to the receiving terminal and comparing received capabilities with the selected content.

9. A method according to claim 1 or 2, **characterised in that** said checking step comprises determining whether the capabilities of the receiving terminal have been cached in a previous multimedia session, and if so, retrieving and comparing the capabilities with the selected content.

10. A method according to claim 8 or 9, **characterised in that** the selected multimedia content is sent by deferred delivery if said comparison indicates incompatibility.

11. A method according to any of claims 6, 7 and 10,
**characterised in that** the sending entity informs its user on the incompatibility and optional deferred delivery, and then sends the multimedia content by deferred delivery if the user consents.

12. A method according to any of claims 6, 7 and 10, **characterised in that** the sending entity sends the multimedia content by deferred delivery, and then informs its user on the incompatibility and sent multimedia content by deferred delivery.

13. A method according to any of claims 1-12, **characterised in that** the method is executed during an ongoing call.

14. A method according to any of claims 1-12, **characterised in that** the method is executed when the sending entity and the receiving terminal are idle.

15. A communication entity adapted to convey multimedia content, as selected by a user, to a receiving terminal, and to send the content by immediate delivery over IP multimedia if the receiving terminal is compatible with respect to the selected multimedia content, **characterised in that** the communication entity is adapted to determine whether the receiving terminal is compatible or incompatible with respect to the selected multimedia content, and to send the selected multimedia content by deferred delivery over an intermediate messaging service node, if the receiving terminal is incompatible with respect to the selected content.

16. A communication entity according to claim 15, **characterised in that** the communication entity is further adapted to send the content by deferred delivery in an MMS message which is stored and processed in said intermediate messaging service node.

17. A communication entity according to claim 15 or 16,
**characterised in that** the communication entity is further adapted to determine the compatibility of the receiving terminal, based on retrieved or obtained terminal capabilities, or based on received session invitation response or lack of such a response.

18. A communication entity according to claim 17,
**characterised in that** the communication entity is further adapted to send an IP multimedia session invitation message to the receiving terminal B, containing a description of the selected content.

19. A communication entity according to claim 18, wherein the content description includes information on a coded format and data size of the selected content.

20. A communication entity according to claim 18 or 19, wherein an IMS network is used and the invitation message is a SIP INVITE message.

21. A communication entity according to any of claims 18-20, **characterised in that** the communication entity is further adapted to send the selected multimedia content by deferred delivery if an error message indicating incompatibility is received in response to the invitation message.

22. A communication entity according to any of claims 18-20, **characterised in that** the communication entity is further adapted to send the selected multimedia content by deferred delivery if no response to the invitation message is received, thereby indicating incompatibility.

23. A communication entity according to any of claims 15-17,
**characterised in that** the communication entity is further adapted to send a capability query to the receiving terminal and compare received capabilities with the selected content.

24. A communication entity according to any of claims 15-17,
**characterised in that** the communication entity is further adapted to determine whether the capabilities of the receiving terminal have been cached in a previous multimedia session, and if so, retrieve and compare the capabilities with the selected content.

25. A communication entity according to claim 23 or 24,
**characterised in that** the communication entity is further adapted to send the selected multimedia content by deferred delivery if said comparison indicates incompatibility.

26. A communication entity according to any of claims 21, 22 and 25, **characterised in that** the communication entity is adapted to inform its user on the incompatibility and optional deferred delivery, and then send the selected multimedia content by deferred delivery if the user consents.

27. A communication entity according to any of claims 21, 22 and 25, **characterised in that** the communication entity is adapted to send the selected multimedia content by deferred delivery, and then inform its user on the incompatibility and sent multimedia content by deferred delivery.
